# EUROPÄISCHE PATENTSCHRIFT

(11) **EP 2 437 186 B1**
(45) Veröffentlichungstag und Bekanntmachung des Hinweises auf die Patenterteilung: **03.10.2018**
(21) Anmeldenummer: 11183837.1
(22) Anmeldetag: 04.10.2011
(51) Int. Cl.: G06F 17/30

(54) **Verfahren zum Erzeugen eines sicheren Datensatzes und Verfahren zum Auswerten**
Method for generating a secure data set and method for evaluating same
Procédé de production d'un ensemble de données sécurisé et procédé d'évaluation

(30) Priorität: 04.10.2010 DE 102010037948
(43) Veröffentlichungstag der Anmeldung: 04.04.2012
(73) Patentinhaber: cp.media AG, 6340 Baar (CH)
(72) Erfinder: Feller, Olaf, 68150 Ribeauville (FR); Brennecke, Burkhardt, 16548 Glienicke (DE)
(74) Vertreter: Bittner, Thomas L.

(56) Entgegenhaltungen:
- EP-A2- 1 022 640
- WO-A2-2007/035275
- GB-A- 2 398 696
- US-A1- 2003 123 701
- US-A1- 2009 100 106
- US-B1- 6 188 766
- US-B2- 7 616 237
- MAURER, UELI: "Intrinsic Limitations of Digital Signatures and How to Cope with Them", ISC 2003, LNCS, Bd. 2851, 2003, Seiten 180-192, XP0019030969, Berlin

## Beschreibung

Die Erfindung bezieht sich auf ein Verfahren zum Erzeugen eines sicheren Datensatzes und ein Verfahren zum Auswerten.

### Hintergrund der Erfindung

Die Manipulation von digitalen Fotos ist mit herkömmlicher Software zur Fotoedition ist im Allgemeinen recht einfach. Während eine Bearbeitung eines Fotos im privaten Rahmen durchaus wünschenswert sein kann, ist es bei anderen Vorgängen, beispielsweise bei Gerichtsprozessen, notwendig, eine nachträgliche Manipulation des Fotos auszuschließen, wenn das Foto als Beweismittel dienen soll. Aufgrund der einfachen Manipulationsmöglichkeit ist die Beweiskraft von Fotos bislang allerdings gering.

Aus dem Dokument US 7,616,237 B2 ist ein Verfahren bekannt, mit dem nachgewiesen werden kann, ob ein Foto von einer bestimmten Digitalkamera aufgenommen wurde. Hierzu werden mehrere Fotos mit der Kamera aufgenommen. Aus den mehreren Fotos wird ein Referenzmuster ermittelt, das eine Näherung eines Rauschens in den Fotos darstellt. Für ein Testbild wird ein Rauschmuster bestimmt. Das Rauschmuster wird mit dem Referenzmuster verglichen und hieraus bestimmt, ob das Testbild mit der Digitalkamera aufgenommen wurde. Das Verfahren ist somit analog zur ballistischen Untersuchung eines Projektils zur Bestimmung, ob das Projektil aus einer bestimmten Schusswaffe abgefeuert wurde.

Das Dokument US 2009/0100106 A1 offenbart ein Verfahren zum sicheren Abspeichern von Fotos oder Videos auf einem Server. Hierzu wird eine Benutzerkennung eines Benutzers bereitgestellt. Mittels eines mobilen Kommunikationsgeräts wird ein Bild oder Video an einen Serviceprovider übersandt. Für das Bild oder Video wird ein Zeitstempel empfangen. Der Zeitstempel sowie das Foto bzw. Video werden der Nutzerkennung zugeordnet und in einer Datenbank abgespeichert.

In dem Dokument US 6,188,766 B1 ist ein Verfahren zum Empfangen und Zeitstempeln von Dokumenten offenbart. Ein Dokument wird mittels eines Faxgeräts an einem Zeitstempeldienst übersandt. Eine Empfangsbestätigung wird von dem Dienst erstellt und zurück übersandt, wobei die Empfangsbestätigung eine verkleinerte Abbildung des Dokuments sowie einen Dokumentenidentifikationswert umfasst.

Das Dokument U. Maurer, ISC 2003, LNCS 2851, Seiten 180 - 192 (2003) offenbart ein Verfahren zum Aufnehmen von digitalen Willenserklärungen.

Das Dokument US 2003/026611 A1 offenbart eine Bildaufnahmeeinrichtung, die eingerichtet ist, zeitgleich Bildaufnahmen in Vorwärts- und Rückwärtsrichtung aufzunehmen.

### Zusammenfassung der Erfindung

Aufgabe der Erfindung ist es, verbesserte Verfahren zum Erzeugen eines sicheren Datensatzes und zum Auswerten anzugeben. Es soll die Beweissicherheit erhöht sowie die nachträgliche Verifikation des Datensatzes gewährleistet werden.

Diese Aufgabe wird erfindungsgemäß durch ein Verfahren zum Erzeugen eines sicheren Datensatzes nach dem unabhängigen Anspruch 1 gelöst. Vorteilhafte Ausgestaltungen der Erfindung sind Gegenstand von abhängigen Unteransprüchen.

Mit der Erfindung ist die Möglichkeit geschaffen, einen sicheren Datensatz zu erzeugen. Es wird hierbei ein Datensatz erzeugt, indem zu digitalen Bilddaten, die ein oder mehrere Bilder repräsentieren, wenigstens eine Zusatzinformation abgespeichert wird. Mit der wenigstens einen Zusatzinformation werden beispielsweise Informationen zur Aufnahme der Bilddaten angegeben. Eine Auswertung der wenigstens einen Zusatzinformation ermöglicht eine Plausibilitätsprüfung der Bilddaten.

Das Verfahren sieht weiterhin vor, einem Datenobjekt mit Bilddaten und der wenigstens einen Zusatzinformation einen qualifizierten Zeitstempel zu zuordnen. Zeitstempel sind gemäß ISO18014-1 digitale Daten, mit denen die Existenz bestimmter Daten vor einem bestimmten Zeitpunkt bewiesen werden kann. Häufig, wie beispielsweise beim Time Stamp Protocol aus RFC3161, werden Zeitstempel unter Einsatz digitaler Signaturen erstellt. Somit sind Zeitstempel eine elektronische Bescheinigung darüber, dass die mit dem Zeitstempel signierten Daten zum Zeitpunkt der Signatur in der signierten Form vorgelegen haben. Der qualifizierte Zeitstempel garantiert rechtssicher, dass zu der mit dem Zeitstempel angegebenen Zeit das Datenobjekt existierte. Rechtssichere, qualifizierte Zeitstempel können nur von akkreditierten Anbietern (*trusted timestamp authority*) erstellt werden. Elektronische Dokumente mit einem qualifizierten Zeitstempel sind für einen Zeitraum von mindestens 30 Jahren auf ihre Gültigkeit hin überprüfbar. Durch den Zeitstempel ist eine hohe Fälschungssicherheit des Datensatzes gegeben.

Durch eine Kombination der Bilddaten mit der wenigstens einen Zusatzinformation und dem qualifizierten Zeitstempel ist eine hohe Beweissicherheit des Datensatzes gewährleistet. Der Datensatz wird hierdurch rechtssicher.

Die digitalen Bilddaten werden mittels eines digitalen Fotosensors aufgenommen, beispielsweise einer Digitalkamera oder eines Mobiltelefons mit Fotoeinrichtung (Foto-Handy) .

Mit dem Verfahren zum Auswerten eines sicheren Datensatzes wird die Gültigkeit des Zeitstempels verifiziert. Es kann vorgesehen sein, das die Verifikation durch einen Vergleich des Zeitstempels mit einem archivierten Exemplar des Zeitstempel erfolgt. Falls der Zeitstempel nicht verifiziert werden kann, gilt der Datensatz als manipuliert und kann nicht als Beweismittel herangezogen werden.

Eine bevorzugte Weiterbildung der Erfindung sieht vor, dass die wenigstens eine Zusatzinformation eine Zeitinformation umfasst, die den Zeitpunkt der Aufnahme der Bilddaten angibt. Für das Erfassen der Zeitinformation können folgende Alternativen vorgesehen sein. Digitalkameras sind in der Regel bereits mit einer Zeiteinrichtung gebildet, die es ermöglicht, die Zeitinformation zum Zeitpunkt der Aufnahme von Bilddaten eines Bildes zu speichern. Alternativ können die Bilddaten mittels eines Foto-Handys aufgenommen werden. In diesem Fall kann die Netzzeit des Mobilfunknetzes zum Erfassen der Zeitinformation verwendet werden. Weiterhin kann alternativ ein Zeitsignal eines Zeitsignalsenders, beispielsweise des DCF77 in Mainflingen, mittels eines geeigneten Empfängers erfasst werden. Alternativ kann ebenfalls vorgesehen sein, ein GPS-Zeitsignal (*GPS* - *global positioning system*), das die koordinierte Weltzeit (*UTC* - *coordinated universal time*) angibt, zu erfassen.

Bei einer zweckmäßigen Ausgestaltung der Erfindung kann vorgesehen sein, dass die wenigstens eine Zusatzinformation eine Umgebungsinformation zu der Umgebung umfasst, in der die Bilddaten aufgenommen wurden. Hierbei kann vorgesehen sein, dass die Umgebungsinformation wenigstens eine Parameterinformation ausgewählt aus der folgenden Gruppe umfasst: Ort, Temperatur, Luftdruck, Luftfeuchte, Helligkeit, Erdmagnetfeld, elektrische Feldstärke, Signalstärke einer Referenzquelle, Lautstärke, Frequenzspektrum, chemische Daten, biologische Daten, Daten zu einer Krafteinwirkung und Gewicht.

Beispielsweise kann vorgesehen sein, Informationen über eine Mobilfunkzelle eines Mobilfunknetzes als Umgebungsinformation zur Bestimmung des Ortes zu erfassen. Alternativ oder ergänzend kann der Ort mittels eines globalen Satellitensystems, beispielsweise GPS, bestimmt werden. Hierdurch wird eine sehr genaue Bestimmung des Ortes der Aufnahme der Bilddaten gewährleistet.

Mittels geeigneter Sensoren können weitere Informationen zu der Umgebung erfasst werden, die in der Umgebung der Aufnahme der Bilddaten vorlagen, wie die Temperatur, der Luftdruck, die Luftfeuchte, die Helligkeit, die Stärke des Erdmagnetfelds, die elektrische Feldstärke, die Signalstärke einer Referenzquelle, die Lautstärke, das Frequenzspektrum, chemische Daten, biologische Daten, Daten zu einer Krafteinwirkung und Gewicht. Die Erfassung und Auswertung der Umgebungsinformation erhöht die Plausibilität der Bilddaten.

Bevorzugt kann vorgesehen sein, dass die Geräteinformation eine Seriennummer des Fotosensors umfasst. Alternativ oder ergänzend kann vorgesehen sein, Informationen über die SIM-Karte eines Foto-Handys zu erfassen. Weiterhin kann alternativ oder ergänzend vorgesehen sein, eine Orientierung und / oder eine Beschleunigung eines Fotosensors zu erfassen, beispielsweise mittels eines GPS-Systems.

Es ist vorgesehen, dass die Bilddaten ein Objektbild und ein Benutzerbild eines Benutzers, der das Objektbild aufgenommen hat, repräsentieren. Hierdurch wird eine Zuordnung des Benutzers zu dem Objektbild ermöglicht und somit die Beweissicherheit des Datensatzes erhöht. Es kann vorgesehen sein, dass die Aufnahme des Objektbildes und des Benutzerbildes mittels des digitalen Fotosensors unmittelbar nacheinander erfolgt. Alternativ kann vorgesehen sein, dass das Objektbild und das Benutzerbild zeitgleich mittels einer digitalen Vorwärts-Rückwärts-Kamera aufgenommen werden.

Bei einer vorteilhaften Ausgestaltung der Erfindung kann vorgesehen sein, dass die Softwareapplikation mit einer Signatureinheit versehen ist, mittels derer sich ein Anwender der Softwareapplikation authentisiert. Mittels der Signatureinheit muss sich ein Anwender vor der Benutzung der Softwareapplikation mittels einer persönlichen gültigen Anwendersignatur authentisieren. Hierdurch ist gewährleistet, dass nur berechtigte Anwender auf die Softwareapplikation zugreifen. Bevorzugt ist die Anwendersignatur als qualifizierte Anwendersignatur ausgeführt. Die qualifizierte Anwendersignatur kann in einer Speichereinheit, beispielsweise einer SD- oder Micro-SD-Karte, integriert sein. Alternativ kann die Anwendersignatur als Programmimplementation in der Softwareapplikation integriert sein. In beiden Fällen kann vorgesehen sein, dass sich der Anwender mittels der Eingabe eines Authentisierungsschlüssels identifiziert.

Eine vorteilhafte Weiterbildung der Erfindung sieht vor, dass Anwendersignaturdaten der Anwendersignatur empfangen werden und das Datenobjekt die Bilddaten, die wenigstens eine Zusatzinformation und die Anwendersignaturdaten umfassend erzeugt wird. Hierdurch ist bei einer Auswertung des Datensatzes eine Identifikation des Anwenders gewährleistet. Alternativ kann vorgesehen sein, dass die Anwendersignaturdaten eine Maschinensignatur umfassen, die eine Maschine eindeutig identifizieren.

Bei einer zweckmäßigen Weiterbildung der Erfindung kann vorgesehen sein, dass die Softwareapplikation mit einer elektronischen Applikationssignatur versehen ist. Mittels der Applikationssignatur wird eine Manipulation der Softwareapplikation verhindert. Bevorzugt ist vorgesehen, dass Applikationssignaturdaten der Applikationssignatur empfangen werden und das Datenobjekt die Bilddaten, die wenigstens eine Zusatzinformation und die Applikationssignaturdaten umfassend erzeugt wird. Hierdurch ist bei einer Auswertung des Datensatzes eine Identifikation des Softwarestandes der Softwareapplikation gewährleistet, was aus Revisionsgründen vorteilhaft ist.

Bei einer zweckmäßigen Fortbildung der Erfindung kann vorgesehen sein, dass weitere Daten empfangen werden und das Datenobjekt die Bilddaten, die wenigstens eine Zusatzinformation und die weiteren Daten umfassend erzeugt wird. Es kann vorgesehen sein, dass die weiteren Daten elektronische Kopien eines oder mehrerer Dokumente repräsentieren. Bevorzugt umfassen die Bilddaten ein oder mehrere Fotos eines Verfassers der Dokumente, so dass bei einer Auswertung des Datensatzes eine Zuordnung der Dokumente zu dem Verfasser ermöglicht ist. Alternativ oder ergänzend kann vorgesehen sein, dass die Bilddaten Fotos von Personen umfassen, die die Dokumente, beispielsweise Verträge, unterzeichnet haben. In einer Ausführungsform kann vorgesehen sein, dass die weiteren Daten eine oder mehrere Emails umfassen. Hierzu kann vorgesehen sein, dass die Bilddaten ein oder mehrere Fotos eines Absenders der Email aufweisen.

Eine Fortbildung der Erfindung sieht vor, dass die weiteren Daten einen Repräsentationswert, der einem sequenzierten Datenstrom zugeordnet ist, umfassen. Ein kontinuierlicher Datenstrom wird in einem Zeitintervall, das durch eine Startzeit und eine Endzeit begrenzt ist, in mehrere Sequenzen unterteilt. Bevorzugt erfolgt die Unterteilung synchron nach einem vorgegebenen Takt. Alternativ kann vorgesehen sein, dass die Unterteilung asynchron, beispielsweise durch einen Benutzer gesteuert, erfolgt. Den mehreren Sequenzen werden nach bekannten Verfahren jeweils Hashwerte zugeordnet, die in einem Hashbaum angeordnet werden. Die Spitze des Hashbaums entspricht dem Repräsentationswert des sequenzierten Datenstroms. Somit werden die mehreren Sequenzen auf einen einzigen Repräsentationswert abgebildet. Der sequenzierte Datenstrom umfasst bevorzugt Audiodaten, Videodaten, einen Messdatenstrom, der von einer Mess- und/oder Steuereinrichtung bereitgestellt wird, Bankdaten, die die Transaktion an einem Automaten, beispielsweise einem Geldautomaten, erfassen, Faxdaten, die die Übertragung eines Faxes erfassen, und / oder Daten einer digitalen Datentransaktion.

Das Verfahren bezieht sich auf die Eigenschaft jedes digitalen Fotosensors in den mit dem Fotosensor aufgenommen Bilddaten ein eigenes, unverwechselbares Rauschmuster zu hinterlassen. Mittels eines Vergleichs des Rauschmusters von Bilddaten eines Datensatzes mit einem Referenzmuster eines digitalen Fotosensors kann bestimmt werden, ob die Bilddaten des Datensatzes von dem digitalen Fotosensor aufgenommen wurden. Fälschungen werden somit schnell und zuverlässig erkannt.

### Beschreibung bevorzugter Ausführungsbeispiele der Erfindung

Die Erfindung wird im Folgenden anhand von Ausführungsbeispielen unter Bezugnahme auf Figuren einer Zeichnung näher erläutert. Hierbei zeigen:
- Fig.1: eine schematische Darstellung eines Verfahrens zum Erzeugen eines sicheren Datensatzes mittels einer Softwareapplikation, die auf einer Datenverarbeitungsanlage ausgeführt wird (bezeichnet als SecDoc) und
- Fig. 2: eine schematische Darstellung einer alternativen Ausführungsform eines Verfahrens zum Erzeugen eines sicheren Datensatzes mittels einer Softwareapplikation, die auf einer Datenverarbeitungsanlage ausgeführt (bezeichnet als SecStream) wird.

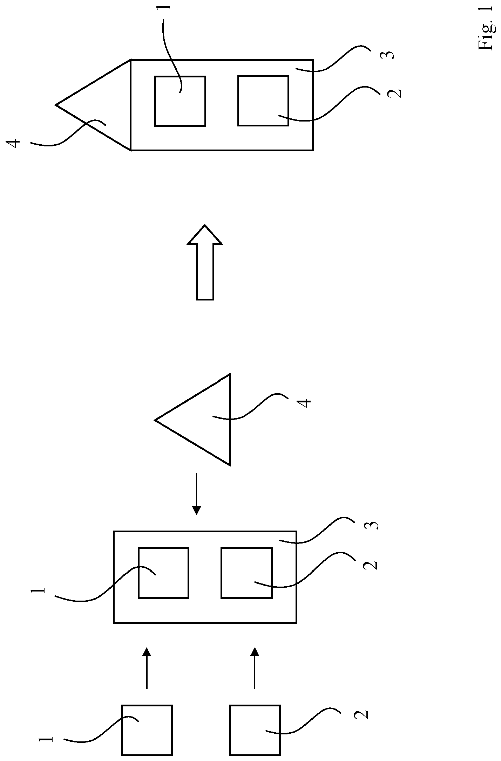

Fig. 1 zeigt schematische Darstellung eines Verfahrens zum Erzeugen eines sicheren Datensatzes mittels einer Softwareapplikation, die auf einer Datenverarbeitungsanlage ausgeführt wird. Bilddaten (1), die ein oder mehrere Bilder repräsentieren werden empfangen. Zu den Bilddaten (1) wird wenigstens eine Zusatzinformation (2) empfangen. In einer Ausführungsform erfolgt der Empfang der Bilddaten (1) und / oder der wenigstens einen Zusatzinformation (2) über eine gesicherte Verbindung. Die gesicherte Verbindung kann beispielsweise als SSL-Verbindung (*SSL* - *secure sockets layer*) oder HTTPS-Verbindung (*HTTPS* - *hypertext transport protocol secure*) ausgeführt sein.

Die Bilddaten (1) umfassen in einer Ausführungsform ein Objektbild und ein Benutzerbild eines Benutzers, der das Objektbild aufgenommen hat. Hierdurch kann der Benutzer identifiziert werden. Des Weiteren ist eine Zuordnung des Benutzers zu dem Objektfoto ermöglicht. Der Benutzer kann somit in einem Beweisverfahren auch als Zeuge geladen werden. Besonders sicher ist die Zuordnung des Benutzers zu dem Objektbild, wenn das Objektbild und das Benutzerbild zeitgleich mittels einer Vorwärts-Rückwärts-Kamera aufgenommen werden.

In einer Ausführungsform kann vorgesehen sein, dass die wenigstens eine Zusatzinformation (2) eine Zeitinformation, die den Zeitpunkt der Aufnahme der Bilddaten angibt, und eine Umgebungsinformation, die den Ort der Aufnahme der Bilddaten angibt, umfasst. Die Informationen zu Zeit und Ort können beispielsweise aus einem Mobilfunknetz als Netzzeit und Mobilfunkzelle bestimmt werden.

Ein Datenobjekt (3) wird erzeugt, das die Bilddaten (1) und die wenigstens eine Zusatzinformation (2) umfasst. Ein dem Datenobjekt (3) zugeordneter Hashwert wird berechnet. Der Hashwert muss hierbei möglichst kollisionsfrei erzeugt werden. Geeignete Hashfunktionen zur Berechnung des Hashwertes sind beispielsweise "SHA256" und "SHA512" aus der SHA-2 Hash-Algorithmen-Gruppe der National Security Agency (NSA) oder der Whirlpool-Algorithmus des europäischen NESSIE-Projekts (New European Schemes for Signatures, Integrity, and Encryption, IST-1999-12324).

In einer Ausführungsform kann vorgesehen sein, dass die Softwareapplikation mit einer Signatureinheit versehen ist. Anwendersignaturdaten der Signatureinheit, mittels derer sich ein Anwender als berechtigter Nutzer authentisiert, werden von der Softwareapplikation empfangen. Das Datenobjekt (3) wird erzeugt und umfasst die Bilddaten (1), die wenigstens eine Zusatzinformation (2) und die Anwendersignaturdaten. Zu dem Datenobjekt (3) wird der Hashwert berechnet. In einer weiteren Ausführungsform ist vorgesehen, dass die Softwareapplikation aus Revisionsgründen mit einer Applikationssignatur versehen ist. Applikationssignaturdaten der Applikationssignatur werden empfangen. Das Datenobjekt (3) wird erzeugt und umfasst die Bilddaten (1), die wenigstens eine Zusatzinformation (2), die Anwendersignaturdaten und / oder die Applikationssignaturdaten.

Der Hashwert wird an einen amtlich anerkannten Zeitstempeldienst übermittelt. Die Übermittlung kann über eine breitbandige Netzanbindung, beispielsweise TCP (*TCP* - *transmission control protocol*) oder eine schmalbandige Netzanbindung, beispielsweise SMS (*SMS - short message service*) erfolgen. Bei einem schmalbandigen Netz erfolgt die Übermittlung in mehreren Paketen. Eine verschlüsselte Übermittlung des Hashwertes kann unter Verwendung eines verschlüsselten Netzprotokolls, beispielsweise SSL, HTTPS oder IPV6sec, vorgesehen sein.

Der Zeitstempeldienst erzeugt einen Zeitstempel zu dem Hashwert und sendet diesen zurück. Ein dem Datenobjekt (3) zugeordneter qualifizierter Zeitstempel (4) wird somit empfangen. Hierdurch ist beweissicher nachweisbar, dass das Datenobjekt mit den Bilddaten und den Zusatzinformationen zur mit dem Zeitstempel angegebenen Zeit existierte. Wenn der Zeitstempeldienst zum ersten Mal angefordert wird, kann vorgesehen sein, dass der Zeitstempel zusammen mit einem Zertifikat übersandt wird. Das Zertifikat kann in der Datenverarbeitungsanlage gespeichert werden. Weitere Anforderungen von Zeitstempeln desselben Zeitstempeldienstes können dann mit Zeitstempeln ohne Zertifikat beantwortet werden. Das zu übertragende Datenvolumen wird hierdurch reduziert.

Schließlich wird das Datenobjekt (3) mit dem zugeordneten Zeitstempel (4) und gegebenenfalls der Signatur der Applikation in einer Datenbank gespeichert.

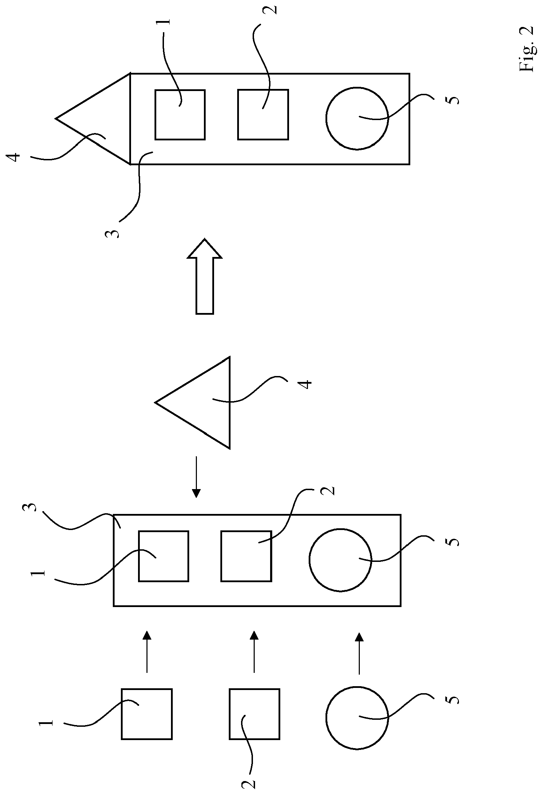

Fig. 2 zeigt eine schematische Darstellung einer alternativen Ausführungsform eines Verfahrens zum Erzeugen eines sicheren Datensatzes mittels einer Softwareapplikation, die auf einer Datenverarbeitungsanlage ausgeführt wird. Gleiche Elemente wie in Fig. 1 sind mit gleichen Bezugszeichen versehen.

Es werden Bilddaten (1), wenigstens eine Zusatzinformation (2) und ein Repräsentationswert (5) eines sequenzierten Datenstroms empfangen. Ein Datenobjekt (3) wird erzeugt, das die Bilddaten (1), die wenigstens eine Zusatzinformation (2) und den Repräsentationswert (5) umfasst. Ein dem Datenobjekt (3) zugeordneter Zeitstempel (4) wird empfangen und das Datenobjekt (3) mit dem zugeordneten Zeitstempel (4) in einer Datenbank gespeichert.

Der Datenstrom kann in einer Ausführungsform ein Faxdatenstrom von einer Faxübertragung sein. Zu einer Startzeit wird ein Foto eines Absenders eines Faxes aufgenommen und die Übertragung des Faxes begonnen. Die Übertragung des Faxes endet mit einer Endzeit, zu dem optional nochmals ein Foto des Absenders aufgenommen wird. Der Faxdatenstrom zwischen der Startzeit und der Endzeit wird in mehrere Sequenzen unterteilt. Den mehreren Sequenzen werden jeweils Sequenzhashwerte zugeodnet, die in einem Hashbaum angeordnet werden. Die Spitze des Hashbaums bildet ein Repräsentationswert (5) des Datenstroms. Analog können auch Datenströme von Audiodaten, Videodaten, einem Messdatenstrom, der von einer Mess- und/oder Steuereinrichtung bereitgestellt wird, Bankdaten, die die Transaktion an einem Automaten, beispielsweise einem Geldautomaten erfassen, und / oder Daten einer digitalen Datentransaktion sequenziert werden.

Zur Auswertung eines sicheren Datensatzes, der ein Datenobjekt und ein dem Datenobjekt zugeordneten qualifizierten Zeitstempel umfasst, wird die Gültigkeit des Zeitstempel verifiziert. Dies geschieht beispielsweise durch einen Vergleich mit einem archivierten Zeitstempel. Schlägt die Verifikation des Zeitstempels fehl, so gilt der Datensatz als manipuliert.

Im Folgenden wird auf das Erzeugen eines Referenzmusters für die weitere Auswertung eines Datensatzes eingegangen.

Mittels eines digitalen Fotosensors, beispielsweise einer Digitalkamera oder eines Foto-Handys werden Referenzbilddaten, die mehrere Referenzbilder repräsentieren, bereitgestellt.

In einer Ausführungsform werden Referenzbilddaten, die zehn Referenzbildern entsprechen aufgenommen.

Die Referenzbilddaten werden von einer Referenzapplikation empfangen, welche in einer Ausführungsform mit einer Referenzsignatur versehen ist. Aus den Referenzbilddaten wird ein Referenzmuster ("digitaler Fingerabdruck") erzeugt, beispielsweise nach dem Verfahren, das in dem Dokument US 7,616,237 B2 beschrieben ist. Zu dem Referenzmuster wird ein Referenz-Zeitstempel analog zu dem oben beschriebenen Schritten erzeugt und empfangen. Das Referenzmuster wird mit dem zugeordneten Referenzzeitstempel in einer Datenbank gespeichert.

Zur Auswertung eines nach dem obigen Verfahren erzeugten Datensatzes wird ein Rauschmuster, das den Bilddaten entnommen wird, mit dem Referenzmuster verglichen. Hierdurch kann bestimmt werden, ob eine Korrelation zwischen dem Referenzmuster und dem Rauschmuster vorliegt und somit ob die Bilddaten mit dem digitalen Fotosensor aufgenommen wurden, zu dem das Referenzmuster erzeugt wurde.

Die in der vorstehenden Beschreibung, den Ansprüchen und der Zeichnung offenbarten Merkmale der Erfindung können sowohl einzeln als auch in beliebiger Kombination für die Verwirklichung der Erfindung in ihren verschiedenen Ausführungen von Bedeutung sein.

## Patentansprüche

1. Verfahren zum Erzeugen eines sicheren Datensatzes mit folgenden Schritten:
a) zeitgleiches Aufnehmen eines Objektbildes und eines Benutzerbildes von einem Benutzer, der das Objektbild aufnimmt, mittels einer digitalen Vorwärts-Rückwärts-Kamera, so dass das Objektbild und das Benutzerbild als digitale Bilddaten vorliegen,
b) Empfangen der digitalen Bilddaten (1),
c) Empfangen von wenigstens einer Zusatzinformation (2) zu den Bilddaten (1),
d) Erzeugen eines Datenobjekts (3), das die Bilddaten (1) und die wenigstens eine Zusatzinformation (2) umfasst,
e) Empfangen eines dem Datenobjekt (3) zugeordneten qualifizierten Zeitstempels (4) und
f) Speichern des Datenobjekts (3) mit dem zugeordneten Zeitstempel (4) in einer Datenbank,
wobei die Schritte b) bis f) mittels einer Softwareapplikation ausgeführt werden, die auf einer Datenverarbeitungsanlage ausgeführt wird.

2. Verfahren nach Anspruch 1, **dadurch gekennzeichnet, dass** die wenigstens eine Zusatzinformation (2) eine Zeitinformation umfasst, die den Zeitpunkt der Aufnahme der Bilddaten (1) angibt.

3. Verfahren nach Anspruch 1 oder 2, **dadurch gekennzeichnet, dass** die wenigstens eine Zusatzinformation (2) eine Umgebungsinformation zu der Umgebung umfasst, in der die Bilddaten (1) aufgenommen wurden.

4. Verfahren nach Anspruch 3, **dadurch gekennzeichnet, dass** die Umgebungsinformation wenigstens eine Parameterinformation ausgewählt aus der folgenden Gruppe umfasst: Ort, Temperatur, Luftdruck, Luftfeuchte, Helligkeit, Erdmagnetfeld, elektrische Feldstärke, Signalstärke einer Referenzquelle, Lautstärke, Frequenzspektrum, chemische Daten, biologische Daten, Daten zu einer Krafteinwirkung und Gewicht.

5. Verfahren nach einem der vorangehenden Ansprüche, **dadurch gekennzeichnet, dass** die wenigstens eine Zusatzinformation (2) eine Geräteinformation betreffend einen Fotosensor umfasst, mit welchem die Bilddaten (1) aufgenommen wurden.

6. Verfahren nach Anspruch 5, **dadurch gekennzeichnet, dass** die Geräteinformation wenigstens eine Information ausgewählt aus der folgenden Gruppe umfasst: Seriennummer des Fotosensors, Orientierung des Fotosensors und Beschleunigung des Fotosensors.

7. Verfahren nach einem der vorangehenden Ansprüche, **dadurch gekennzeichnet, dass** die Softwareapplikation mit einer Signatureinheit versehen ist, mittels derer sich ein Anwender der Softwareapplikation mittels einer Anwendersignatur authentisiert.

8. Verfahren nach Anspruch 7, **dadurch gekennzeichnet, dass** Anwendersignaturdaten der Anwendersignatur empfangen werden und das Datenobjekt (3) die Bilddaten (1), die wenigstens eine Zusatzinformation (2) und die Anwendersignaturdaten umfassend erzeugt wird.

9. Verfahren nach einem der vorangehenden Ansprüche, **dadurch gekennzeichnet, dass** die Softwareapplikation mit einer elektronischen Applikationssignatur versehen ist.

10. Verfahren nach Anspruch 9, **dadurch gekennzeichnet, dass** Applikationssignaturdaten der Applikationssignatur empfangen werden und das Datenobjekt (3) die Bilddaten (1), die wenigstens eine Zusatzinformation (2) und die Applikationssignaturdaten umfassend erzeugt wird.

11. Verfahren nach einem der vorangehenden Ansprüche, **dadurch gekennzeichnet, dass** weitere Daten empfangen werden und das Datenobjekt (3) die Bilddaten (1), die wenigstens eine Zusatzinformation (2) und die weiteren Daten umfassend erzeugt wird.

12. Verfahren nach Anspruch 11, **dadurch gekennzeichnet, dass** die weiteren Daten einen Repräsentationswert (5), der einem sequenzierten Datenstrom zugeordnet ist, umfassen.

## Claims

1. A method for generating a secure data set having the following steps:
a) simultaneous recording of an object image and a user image of a user, who is recording the object image, by means of a digital forwards-backwards camera, so that the object image and the user image exist as digital image data,
b) receiving the digital image data (1),
c) receiving at least one piece of additional information (2) relating to the image data (1),
d) generating a data object (3), which comprises the image data (1) and the at least one piece of additional information (2),
e) receiving a qualified time stamp (4) associated with the data object (3), and
f) storing the data object (3) with the associated time stamp (4) in a database,
wherein the steps b) to f) are performed by means of a software application, which is executed on a data processing system.

2. The method according to claim 1, **characterized in that** the at least one piece of additional information (2) comprises time information, which specifies the time of recording of the image data (1).

3. The method according to claim 1 or 2, **characterized in that** the at least one piece of additional information (2) comprises environmental information relating to the environment in which the image data (1) were recorded.

4. The method according to claim 3, **characterized in that** the environmental information comprises at least one parameter information selected from the following group: location, temperature, air pressure, air humidity, brightness, earth's magnetic field, electric field strength, signal strength of a reference source, loudness, frequency spectrum, chemical data, biological data, data relating to the effect of a force and weight.

5. The method according to one of the preceding claims, **characterized in that** the at least one piece of additional information (2) comprises device information relating to a photosensor, with which the image data (1) were recorded.

6. The method according to claim 5, **characterized in that** the device information comprises at least one piece of information selected from the following group: serial number of the photosensor, orientation of the photosensor and acceleration of the photosensor.

7. The method according to any one of the preceding claims, **characterized in that** the software application is provided with a signature unit, by means of which a user of the software application is authenticated by means of a user signature.

8. The method according to claim 7, **characterized in that** user signature data of the user signature are received and the data object (3) is generated comprising the image data (1), the at least one piece of additional information (2) and the user signature data.

9. The method according to one of the preceding claims, **characterized in that** the software application is provided with an electronic application signature.

10. The method according to claim 9, **characterized in that** application signature data of the application signature are received and the data object (3) is generated comprising the image data (1), the at least one piece of additional information (2) and the application signature data.

11. The method according to one of the preceding claims, **characterized in that** additional data are received and the data object (3) is generated comprising the image data (1), the at least one piece of additional information (2) and the additional data.

12. The method according to claim 11, **characterized in that** the additional data comprise a representation value (5), which is assigned to a sequenced data stream.

## Revendications

1. Procédé de génération d'un jeu de données sécurisé comportant les étapes suivantes :
a) enregistrement simultané d'une image d'objet et d'une image d'utilisateur par un utilisateur, qui enregistre l'image d'objet, au moyen d'une caméra numérique d'avant en arrière, de sorte que l'image d'objet et l'image d'utilisateur se présentent comme des données d'image numériques,
b) réception des données d'image numériques (1),
c) réception d'au moins une information supplémentaire (2) relative aux données d'image (1),
d) génération d'un objet de données (3), qui comprend les données d'image (1) et au moins une information supplémentaire (2),
e) réception d'un pointeur temporel (4) qualifié coordonné à l'objet de données (3) et
f) mémorisation de l'objet de données (3) comportant le pointeur temporel coordonné (4) dans une banque de données,
dans lequel les étapes b) à f) sont exécutées au moyen d'une application logicielle, qui est mise en oeuvre sur une installation de traitement de données.

2. Procédé selon la revendication 1, **caractérisé en ce qu'**au moins une information supplémentaire (2) comprend une information temporelle, qui indique le point temporel de l'enregistrement des données d'image (1).

3. Procédé selon la revendication 1 ou 2, **caractérisé en ce qu'**au moins une information supplémentaire (2) comprend une information environnementale relative à l'environnement, dans laquelle les données d'image (1) sont enregistrées.

4. Procédé selon la revendication 3, **caractérisé en ce que** l'information d'environnement comprend au moins une information de paramètre sélectionnée dans le groupe suivant : lieu, température, pression d'air, humidité d'air, luminosité, champ magnétique terrestre, intensité de champ électrique, intensité de signal d'une source de référence, volume sonore, spectre de fréquence, données chimiques, données biologiques, données relatives à l'action d'une force et poids.

5. Procédé selon une de revendications précédentes, **caractérisé en ce qu'**au moins une information supplémentaire (2) comprend un capteur photosensible concernant une information d'appareil, avec lequel les données d'image (1) ont été enregistrées.

6. Procédé selon la revendication 5, **caractérisé en ce que** l'information d'appareil comprend au moins une information sélectionnée dans le groupe suivant : numéro de série du capteur photosensible, orientation du capteur photosensible et accélération du capteur photosensible.

7. Procédé selon une des revendications précédentes, **caractérisé en ce que** l'application logicielle est pourvue d'une unité de signature, au moyen de laquelle un utilisateur de l'application logicielle est authentifié au moyen d'une signature d'utilisateur.

8. Procédé selon la revendication 7, **caractérisé en ce que** des données de signature d'utilisateur de la signature d'utilisateur sont reçues et l'objet de données (3) comprenant les données d'image (1), au moins une information supplémentaire (2) et les données de signature d'utilisateur est généré.

9. Procédé selon une des revendications précédentes, **caractérisé en ce que** l'application logicielle est pourvue d'une signature d'application électronique.

10. Procédé selon la revendication 9, **caractérisé en ce que** les données de signature d'application de la signature d'application sont reçues et l'objet de données (3) comprenant les données d'image (1), au moins une information supplémentaire (2) et les données de signature d'application est généré.

11. Procédé selon une des revendications précédentes, **caractérisé en ce que** des données supplémentaires sont reçues et l'objet de données (3) comprenant les données d'image (1), au moins une information supplémentaire (2) et les données supplémentaires est généré.

12. Procédé selon la revendication 11, **caractérisé en ce que** les données supplémentaires comprennent une valeur de représentation (5), qui est coordonnée à un flux de données séquence.
